# EUROPEAN PATENT SPECIFICATION

(11) **EP 1 307 802 B1**
(45) Date of publication and mention of the grant of the patent: **26.01.2005**
(21) Application number: 01935153.5
(22) Date of filing: 08.05.2001
(51) Int. Cl.: G06F 1/00

(54) **METHOD AND APPARATUS FOR CENTRALIZED AUTHENTICATION**
VERFAHREN UND VORRICHTUNG ZUR ZENTRALISIERTEN AUTHENTIFIZIERUNG
PROCEDE ET DISPOSITIF POUR AUTHENTIFICATION CENTRALISEE

(30) Priority: 10.05.2000 US 567886
(43) Date of publication of application: 07.05.2003
(73) Proprietor: THE PROCTER & GAMBLE COMPANY, Cincinnati, Ohio 45202 (US)
(72) Inventor: JOHNSTON, Stephen, Edward, Burlington, KY 41005 (US)
(74) Representative: Veronese, Pancrazio
(86) International application number: PCT/US2001/014807
(87) International publication number: WO 2001/086392

(56) References cited:
- EP-A- 0 234 100
- EP-A- 0 636 963
- DE-A- 4 411 780
- US-A- 4 720 860
- US-A- 5 491 752
- P-SYNCH: "Introduction to P-Synch - White Paper" INTERNET ARTICLE, [Online] 7 April 2000 (2000-04-07), XP002222993 Retrieved from the Internet: <URL:http://web.archive.org/web/2000040721 2017/http://www.psynch.com/docs/white.html > [retrieved on 2002-11-28]
- NETWORKCOMPUTING: "Token-Based Authentication" INTERNET ARTICLE, [Online] 6 September 1999 (1999-09-06), XP002222994 Retrieved from the Internet: <URL:http://www.networkcomputing.com/1018/ 1018f1side1.html> [retrieved on 2002-11-28]
- NEUMAN B C ET AL: "KERBEROS: AN AUTHENTICATION SERVICE FOR COMPUTER NETWORKS" IEEE COMMUNICATIONS MAGAZINE, IEEE SERVICE CENTER. PISCATAWAY, N.J, US, vol. 32, no. 9, 1 September 1994 (1994-09-01), pages 33-38, XP000476553 ISSN: 0163-6804

## Description

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### Technical Field

The present invention relates generally to authentication in computer systems, and will be specifically disclosed as a method and apparatus for centralized user authentication in a computer network.

### Background of the Invention

The virtual explosion of technical advances in microelectronics, digital computers and software have changed the face of modem society. In fact, these technological advances have become so important and pervasive that this explosion is sometimes referred to as "the information revolution." Through telephone lines, cables, satellite communications and the like, information and resources are ever increasingly being accessed and shared.

To prevent unauthorized access to programs and/or data, computer systems often use various security measures, two examples of which include physical security and login security. As the name implies, physical security refers to limiting physical access to a given computer resource. For instance, servers in a client/server network are often maintained in a locked room with limited access. Login security can vary greatly from one computer system to the next. One common form of login security comprises a login phase and an authentication phase. The login phase typically involves prompting a source (such as a user, a program, a resource, etc.) which is attempting to enter the system for a name and a password. After successfully proving knowledge of the password, the source is authenticated and is allowed whatever level of access is permitted for the source.

The internet article P-SYNCH; "Introduction to P-Synch - White Paper", published online on 7 April 2000, XP002222993 (retrievable from the internet at web address: http://web.archive.org/web/20000407212017/http://www.psynch com/docs/white.html) describes a software for centralized authentication on a computer network, which provides a single interface for changing, resetting and synchronizing passwords across all common platforms.

Beyond variations in the type of login security, the content of login security often varies from one computer system to the next. For example, a user may have a user name and password for one system and have a different user name and password for another system. Accordingly, the user in the previous example is required to remember his user name and password for both systems. The problem is even further compounded in a network of computers having a plurality of computers and programs each operating its own login security system, wherein the user may potentially be required to remember a user name a password for each of the different computers and programs.

### Summary of the Invention

Accordingly, an object of the invention is to provide an improved method and apparatus for authentication in a computer system. Additional objectives, advantages and novel features of the invention will be set forth in the description that follows and, in part, will become apparent to those skilled in the art upon examining or practicing the invention. The objects and advantages of the invention may be realized and obtained by means of the instrumentalities and combinations particularly pointed out in the appended claims.

One aspect of the present invention is a computer system comprising a network of computers. An authentication server on the network comprises an authentication engine having a first state wherein the authentication engine uses a password comprising two elements and a second state wherein the authentication engine uses a password comprising one element. The authentication engine further comprises an application programming interface through which other computers of the network may make requests to the authentication engine. A plurality of agent computers on the network each comprise agent software for the authentication server being encoded for sending a first authentication request via the application programming interface using a password comprising two elements, and if authentication is not established in response to the first authentication request, sending a second authentication request via the application programming interface using a password comprising one element.

Another aspect of the invention is a method for centralized user authentication on a computer network where each of a plurality of agent computers perform the method. A user identifier and token is obtained by at least one of the plurality of networked computers. The user identifier and token are concatenated and passed to a central authentication system on the network. A response is received from the central authentication system, and if the response does not permit access, the token is passed as a password to the central authentication system.

Yet another aspect of the invention is a method for centralized user authentication on a computer network. A user identifier and token are obtained by an agent computer of a central authentication system. The user identifier and token are passed to the central authentication system on the network. If the central authentication system requires the user identifier and token, the passed user identifier and token are processed by the central authentication system to determine whether the user is authenticated. If the central authentication system requires only the token, the passed token is processed by the central authentication system to determine whether the user is authenticated.

Still other aspects of the present invention will become apparent to those skilled in the art from the following description of a preferred embodiment, which is by way of illustration, one of the best modes contemplated for carrying out the invention. As will be realized, the invention is capable of other different and obvious aspects, all without departing from the invention. Accordingly, the drawings and descriptions are illustrative in nature and not restrictive.
**Brief Description of the Drawings** The accompanying drawings, incorporated in and forming part of the specification, illustrate several aspects of the present invention and, together with their descriptions, serve to explain the principles of the invention. In the drawings:
Fig. 1 illustrates an example of a computer;
Fig. 2 illustrates an example of a computer network;
Fig. 3 illustrates an agent and authentication engine;
Fig. 4 depicts a flowchart of an authentication process;
Fig. 5 depicts a flowchart of a next token process;
Fig. 6 depicts a flowchart of a new PIN mode process;
Fig. 7 depicts a flowchart to process a client request; and
Fig. 8 depicts a dialog box;
Fig. 9 depicts a centralized authentication system used for a variety of different types of transactions; and
Figs. 10-18 depict illustrations of exemplary dialog boxes of the present invention.

### Detailed Description

Reference will now be made to the present preferred embodiment of the invention, an example of which is illustrated in the accompanying drawings, wherein like numerals indicate the same element throughout the views.

Often computers communicate between each other and share information, applications and/or services. Computers or computer systems are generally any device capable of processing data in accordance with one or more instructions. Examples of computers include personal computers, workstations, servers, mainframes, embedded systems, microprocessors, discrete logic systems, analog systems, and the like. Sometimes in the setting of interconnected computers, the various computers are referred to as nodes, which is a generic term referring to a point in a interconnected system.

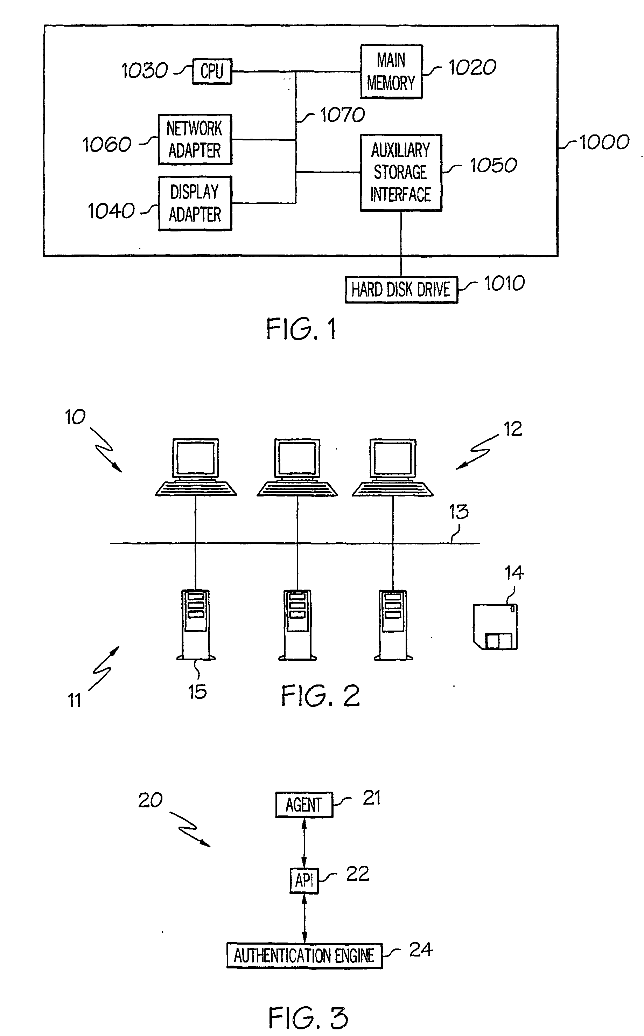

Turning now to Fig. 1, the present invention may be implemented, for example, by operating a computer system 1000 to execute a sequence of machine-readable instructions. These instructions may reside in various types of signal bearing media, such hard disk drive 1010 and main memory 1020. In this respect, another aspect of the present invention concerns a program product, comprising signal bearing media embodying a program of machine-readable instructions, executable by a digital data processor, such as central processing unit (CPU) 1030, to perform method steps. The machine-readable instructions may comprise any one of a number of programming languages known in the art (e.g., C, C++, etc.).

It should be understood that the present invention may be implemented on any type of computer system. Accordingly, the present invention is not limited to implementation on the type computer system shown in Fig. 1. As shown, computer system 1000 comprises main or central processing unit (CPU) 1030, which is connected to main memory 1020 (e.g., random access memory (RAM)), a display adapter 1040, an auxiliary storage adapter 1050, and a network adapter 1060. These system components are interconnected through the use of a system bus 1070.

CPU 1030 may be, for example, a Pentium Processor made by Intel Corporation. However, it should be understood that the present invention is not limited to any one make of processor and the invention may be practiced using some other type of a processor such as a co-processor or an auxiliary processor. Auxiliary storage adapter 1050 is used to connect mass storage devices (such as hard disk drive 1010) to computer system 1000. The program need not necessarily all simultaneously reside on computer system 1000. Indeed, this latter scenario would likely be the case if computer system 1000 were a network computer, and therefore, be dependent upon an on-demand shipping mechanism for access to mechanisms or portions of mechanisms that resided on a server. Display adapter 1050 is used to directly connect a display device to computer system 1000. Network adapter 1060 is used to connect computer system 1000 to other computer systems.

It is important to note that while the present invention has been described in the context of a fully functional computer system, those skilled in the art will appreciate that the mechanisms of the present invention are capable of being distributed as a program product in a variety of forms, and that the present invention applies equally regardless of the particular type of signal bearing media used to actually carry out the distribution. Examples of signal bearing media include: recordable type media, such as floppy disks, hard disk drives, and CD ROMs and transmission type media, such as digital and analog communications links and wireless.

Fig. 2 illustrates an example of a network 10, shown here as a client/server network implemented as a local area network "LAN" or wide area network "WAN". As one with ordinary skill in the art will readily appreciate, a client/server network is only one type of network, and a variety of other configurations, such as local area networks, wide area networks, peer-to-peer connections, modem connections, the Internet, and the like, are also considered networks. In a client/server network, a plurality of nodes are interconnected such that the various nodes send and/or receive information to/from a server and one another. As shown here, a plurality of server nodes 11 are interconnected to a plurality of client nodes 12 using a communication link 13, such as network interface cards (e.g., Ethernet, token ring, etc.), parallel cables, serial cables, telephone lines, universal serial bus "USB", Firewire, IEEE-1394, Bluetooth, fiber optics, infrared "IR", radio frequency "RF", and the like.

Fig. 2 also depicts a computer readable medium 14, shown here as a floppy diskette. A computer readable medium stores information readable by a computer, such as programs, data files, etc. As one with ordinary skill in the art will readily appreciate, a computer readable medium can take a variety of forms, including magnetic storage (such as hard drives, floppy diskettes, tape, etc.), optical storage (such as laser disks, compact disks, digital video disks "DVD", etc.), electronic storage (such as random access memory "RAM", read only memory "ROM", programmable read only memory "PROM", flash memory, memory sticks, etc.), and the like. Some types of computer readable media, which are sometimes described as being non-volatile, can retain data in the absence of power so that the information is available when power is restored.

The network 10 includes a central authentication system 15. The central authentication system 15 is a centrally managed point to authenticate users on the network 10 and provides a centralized authentication source for the network 10. The central authentication system 15 can take a variety of different forms including a single machine, a distributed system, a master/slave arrangement, and the like. Preferably, the central authentication system 15 uses a strong two-factor authentication system. As shown in the present embodiment, the central authentication system 15 takes the form of an authentication server. For example, the authentication server may comprise Access Control Encryption "ACE" server from RSA Security, Inc. The other computers on the network 10, including clients 12 or other servers 11, can be authentication agents of the authentication server 15. Sometimes an authentication agent is referred to as a client of the authentication server or an agent machine. An agent machine is a known and trusted entity to the authentication server 15 and is registered with the authentication server 15. As shown in Fig. 3, the agent machine 20 which is an authentication agent of the authentication server 15, comprises an agent 21, which typically takes the form of executable software running on the agent machine 20. The agent 21 is adapted to send authentication requests via the application program interface "API" 22 for the authentication engine 24 operating on the authentication server 15. The authentication engine 24 processes authentication requests and replies via the API 22 whether or not a user have been authenticated. As one skilled in the art will appreciate, the method of the present invention may be performed directly by the authentication agent 21, the API 22, or potentially in the authentication engine 24. Preferably, the authentication agent 21 is adapted to send authentication requests via API 22 for the authentication engine 24 operating on the authentication server 15.

An authentication server 15 uses a strong two-factor authentication engine 24. Authentication requests through the API 22 comprise two variables: a login identification and a password (sometimes the password is referred to as a passcode). The login identification, often referred to as login ID, typically takes the form of an alpha-numeric string unique to a user. For instance, the login ID for Steve Johnston may be "SJohnston." The login ID is registered with the authentication engine 24 and is known by the user.

If a strong authentication system is used, the password may comprise a PIN in combination with a token or biometric reading. The biometric reading may include fingerprint, voiceprint, retina scan, thermal imaging or the like. The content of the password depends upon the state of the authentication engine 24 for the account associated with the login ID. For instance, the authentication server may include three states or modes: normal, new PIN, and next token. In normal mode, the password is a combination of two values concatenated with one another: a personal identifier and a token. The personal identifier is an alpha-numeric string, such as a personal identification number "PIN." The token is also a alpha-numeric string, which is preferably generated by a token generator, such as the SecurID authentication provided by RSA Security Inc. As one skilled in the art will readily recognize, the SecurID system is a parallel system for generating tokens. A process operating with the user periodically generates a numeric code. A similar process operating with the authentication engine 24 synchronously generates the same numeric code as the process running with the user. Accordingly, at any time the user and the authentication engine 24 both have common knowledge of a token. New PIN mode occurs when the authentication engine 24 does not recognize the PIN associated with the user, such as for a first time user, when the user forgets his PIN and an administrator resets the mode to ''New PIN" mode, a threshold number of failures occurs, or the like. When the user is in new PIN mode, the password passed by the API 22 to the authentication engine 24 consists only of the token. Next token mode can be triggered by electronic drift in the parallel to the generator, a threshold number of login failures followed by a success login, and the like. When a user is in next token mode, the password passed by the API 22 to the authentication engine 24 is the same as normal mode having a concatenated value of the personal identifier and token. While the values passed by the API 22 to the authentication engine 24 varies on the state of the user, only the authentication engine 24 has knowledge of the state, so the agent 21 will not know what information needs to be passed for the password.

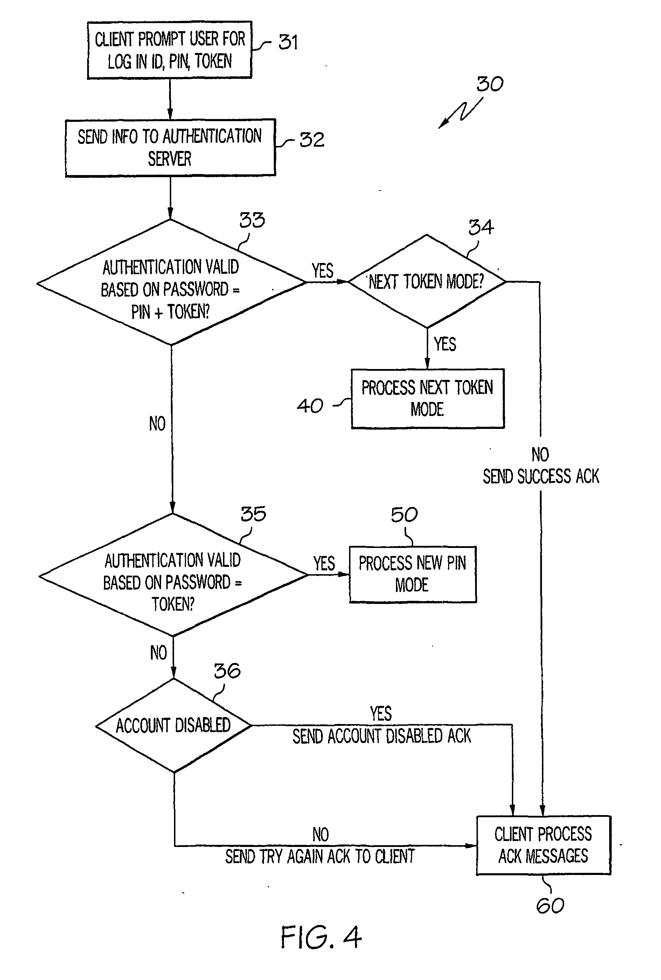

Fig. 4 depicts a flowchart of an authentication process 30, portions of which are preferably implemented as a program running with or part of the agent 21. For instance, the process logic can be compiled integrally with the agent 21. Alternatively, the process logic can be implemented as a function, such as a dynamic link library "DLL" or the like triggered by the agent 21. At step 31, the agent 21 prompts the user to enter his login ID, PIN, and token. Preferably, the user is presented a dialog box with separate fields for each value. At step 32, an API request is prepared by the agent 21 comprising the login ID and password concatenated with the PIN and token. The authentication request is sent by the API 22 to the authentication engine 24. When the authentication engine 24 responds, the agent at step 33 determines whether the authentication was valid. If valid, at step 34 the process determines whether the user is in next token mode. If so, the next token process 40 is implemented, and if not a success acknowledgment "ACK" is sent to the agent 21. If the authentication was invalid, the agent prepares a new API request comprising the login ID and password using only the token. At step 35 if the new request is valid, the new PIN mode process 50 is implemented. If, however, the authentication request was invalid, the process determines at step 36 whether the account for the entered login ID was disabled. If disabled, an account disabled ACK is sent to the agent 21, and if not disabled a try again ACK is sent to the agent 21.

In another embodiment, the agent 21 prepares the API request by mixing the PIN and token together to form a Passcode. This mixing can be based on a pre-defined algorithm. The authentication request is sent by the API 22 to the authentication engine 24. The authentication engine 24 contains the same algorithm to authenticate the mixed PIN and token (Passcode). In yet another embodiment, the authentication engine 24 may utilize the algorithm to "un-mix" the Passcode to obtain the PIN and token.

In another embodiment, portions of the process logic 30 can be incorporated with the authentication engine 24. For instance, a concatenated password of the PIN and token could be passed to the authentication engine 23, and at step 35 the authentication engine 24 would parse the password to read only the token, preferably by extracting only the last number of characters in the password corresponding to the length of the token. In another embodiment, the authentication engine 24 at step 35 calculates the token from the password using a reverse hash algorithm. For example, a user enters a Login ID and token generated using a token generation device with hashing for an entered PIN. A user inputs the PIN in the token generation device and the device generates a specific token from an algorithm incorporating the PIN. The user enters the hashed token and the Login ID, wherein the authentication agent passes the token and Login ID to the authentication engine 24. The authentication engine 24 deconstructs the hashed token to verify the token by utilization of a stored PIN corresponding to the Login ID.

Alternatively, the API 22 could accept separate variables for the login ID, user identifier, and token, as opposed to a concatenated password. Accordingly, the authentication engine 24 need only read the variable for the token.

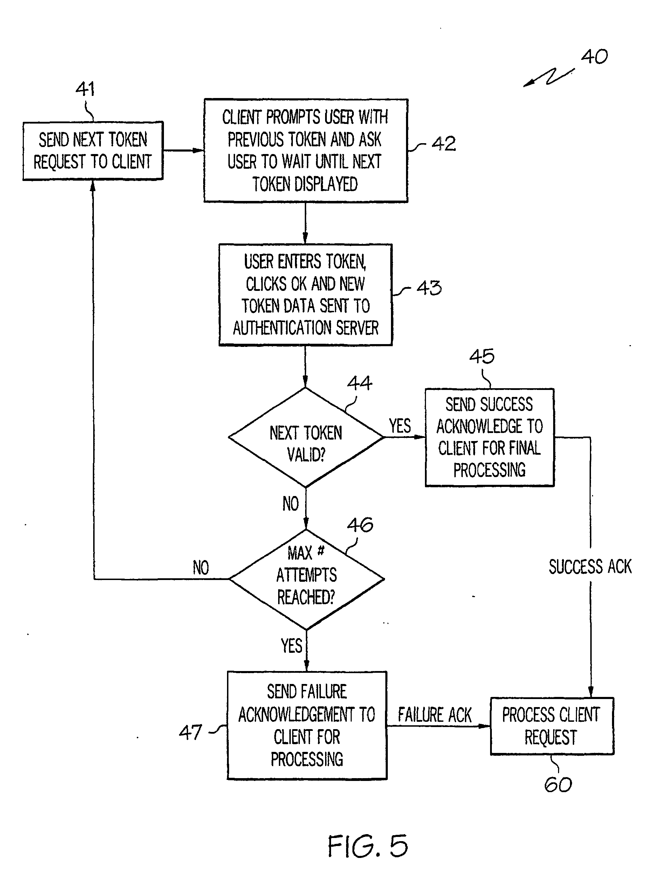

Fig. 5 depicts a flowchart for a next token mode process 40. At step 41, a next token request is sent to the agent 21. The agent 21 at step 42 prompts the user with the previous token and asks the user to wait till the next token is displayed on the SecurID. At step 43, the user enters the next token, which is passed to the authentication engine 24 from the authentication agent 21 or its API 22. During step 44, the next token is evaluated to determine if it is valid. If so, at step 45 a success message is sent to the agent 21 followed by a success ACK. If not, the process determines at step 46 whether a threshold number of attempts have been reached. If not, the process returns to step 41 and the number of attempts is incremented. If so, a failure message is sent to the agent 21 at step 47 followed by a failure ACK.

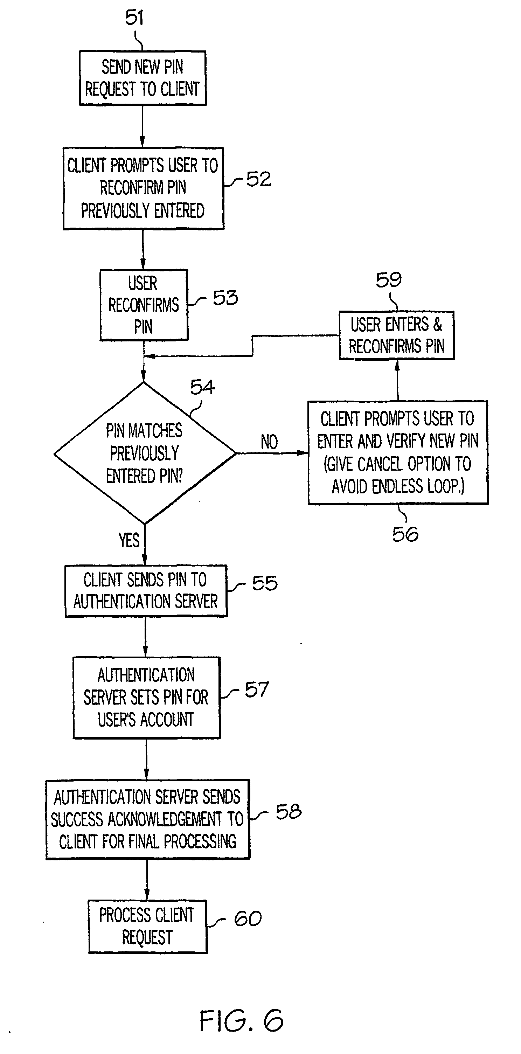

Fig. 6 depicts a flowchart for a new PIN mode process 50. The new PIN mode is an administratively set mode, i.e. an administrator must configure the user's authentication state to new PIN mode. At step 51, a new PIN request is sent to the agent 21 from the authentication engine 24. The agent 21 at step 52 prompts the user to enter and reconfirm the previously entered PIN. At step 53, the user enters the reconfirmation PIN. During step 54, the reconfirmation PIN is compared to the previously entered PIN by the agent 21 to see if they match. If so, at step 55, the PIN data is sent to the authentication engine 24 by the agent 21. The authentication engine sets the PIN for the user's account at step 57. Then, at step 58, the authentication engine sends a success acknowledgment to the agent for the final process. If the reconfirmation PIN does not match the previously entered PIN at step 54, the client prompts the user to enter and verify a new PIN (step 56). The user enters and reconfirms the PIN at step 59. The process then repeats step 54 to determine if the PIN numbers match.

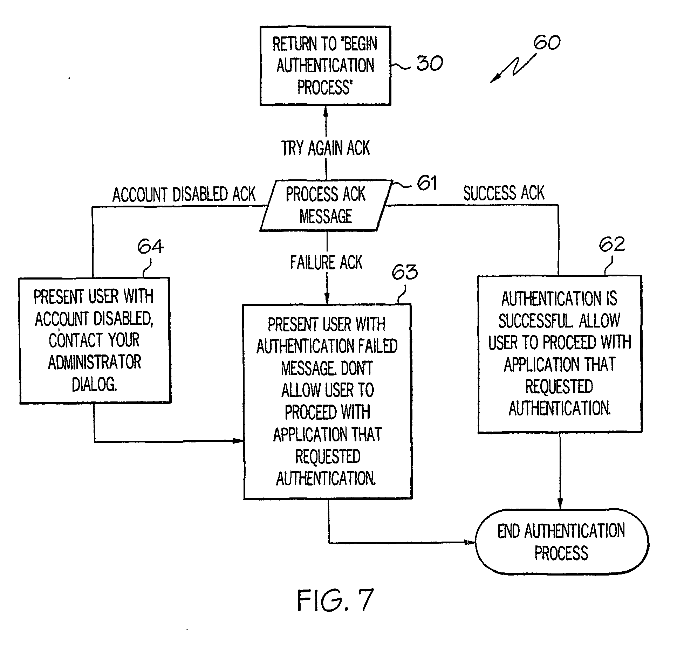

Fig. 7 depicts a flowchart of agent process 60 based on ACK messages. ACK messages are received and processed at block 61. If a try again ACK was received, the process moves to the authentication process 30. If a success ACK was received, at block 62 authentication is a success and the user is allowed to proceed. If a failure ACK was received, at block 63 the user is presented a authentication failed message and the user is not allowed access. If an account disable ACK was received, the user is presented at block 64 with an account disable message, followed by an authentication failed message.

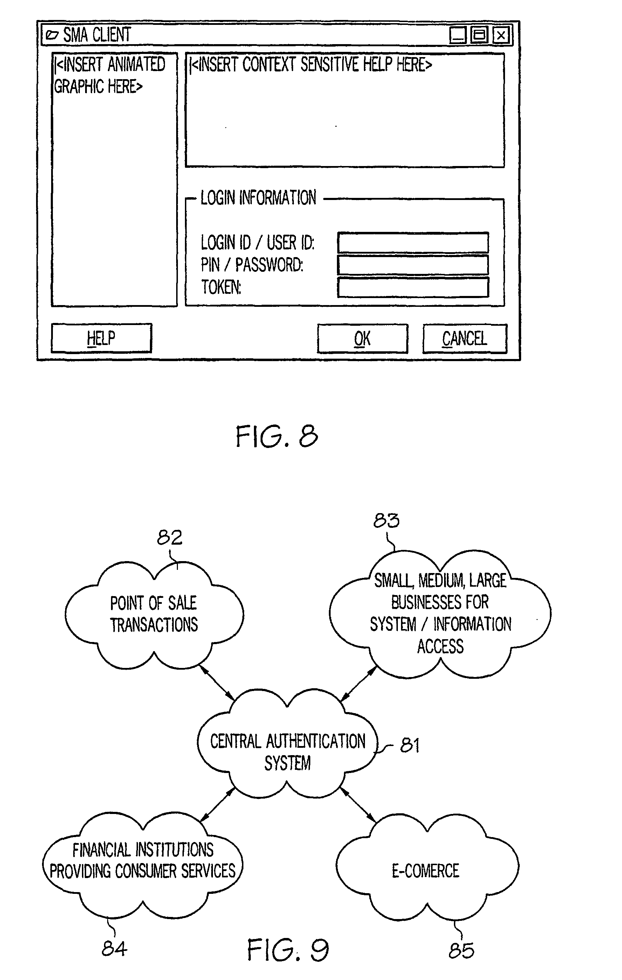

Consider the following MFC example programmed in Microsoft Visual C++. In a typical embodiment, a dialog box is presented prompting the user for user name and a passcode. In the present example, a dialog box is presented in the form of Fig. 8.

The above code grabs the PIN value entered in the dialog box of Fig. 8 and sets it in a variable strPassword. When the OK button on the dialog box is selected, the Class Cdlgsma::OnOK() listed below is invoked.

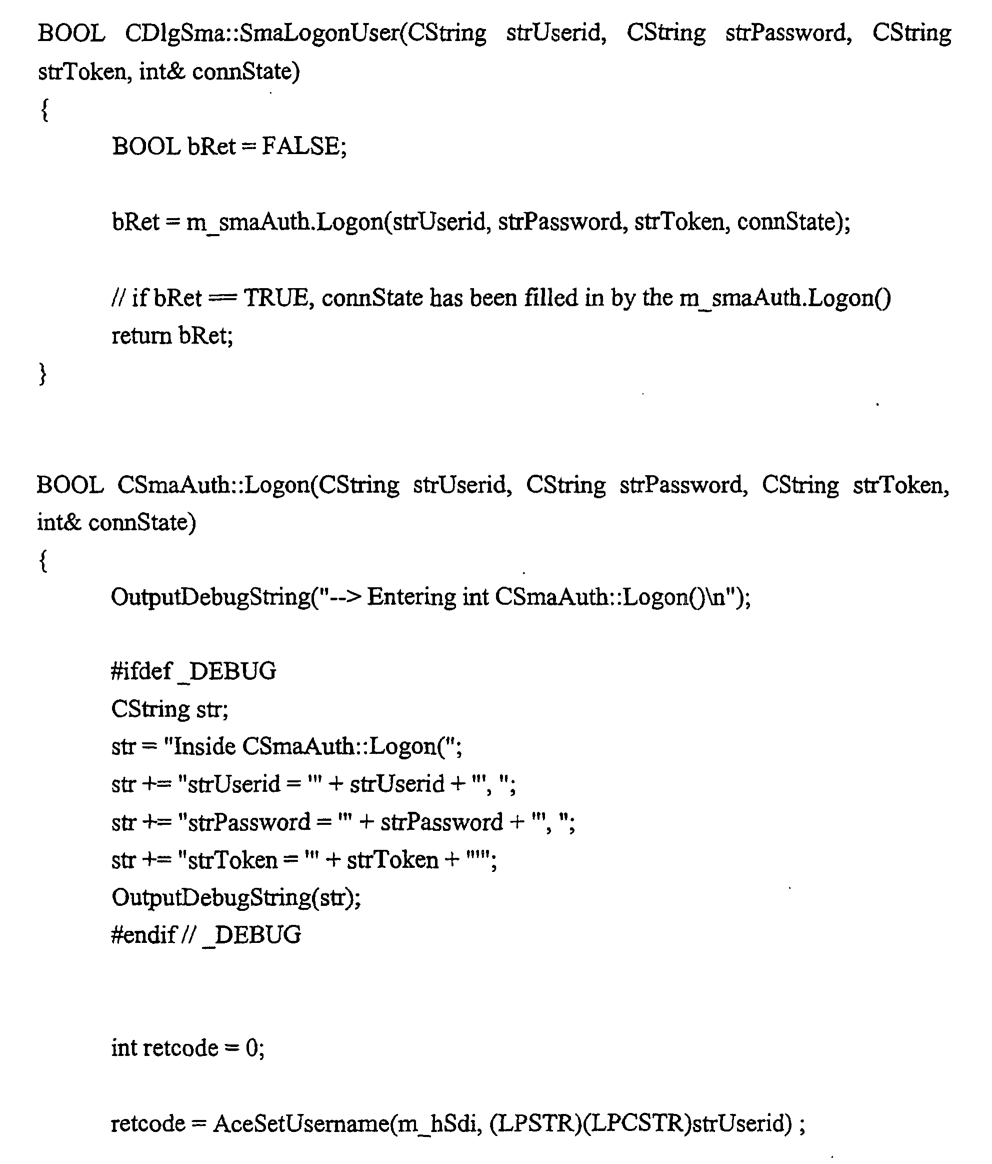

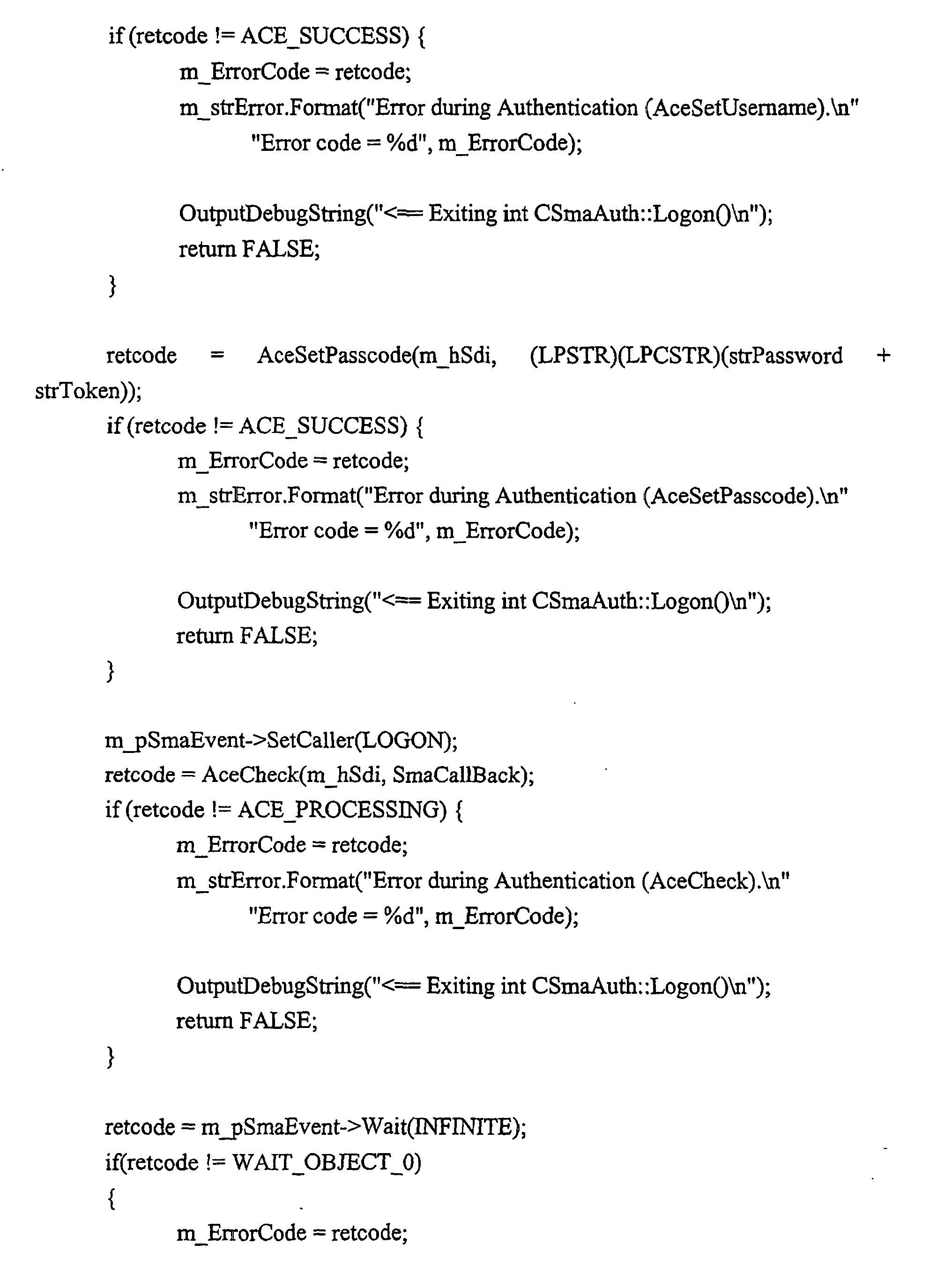

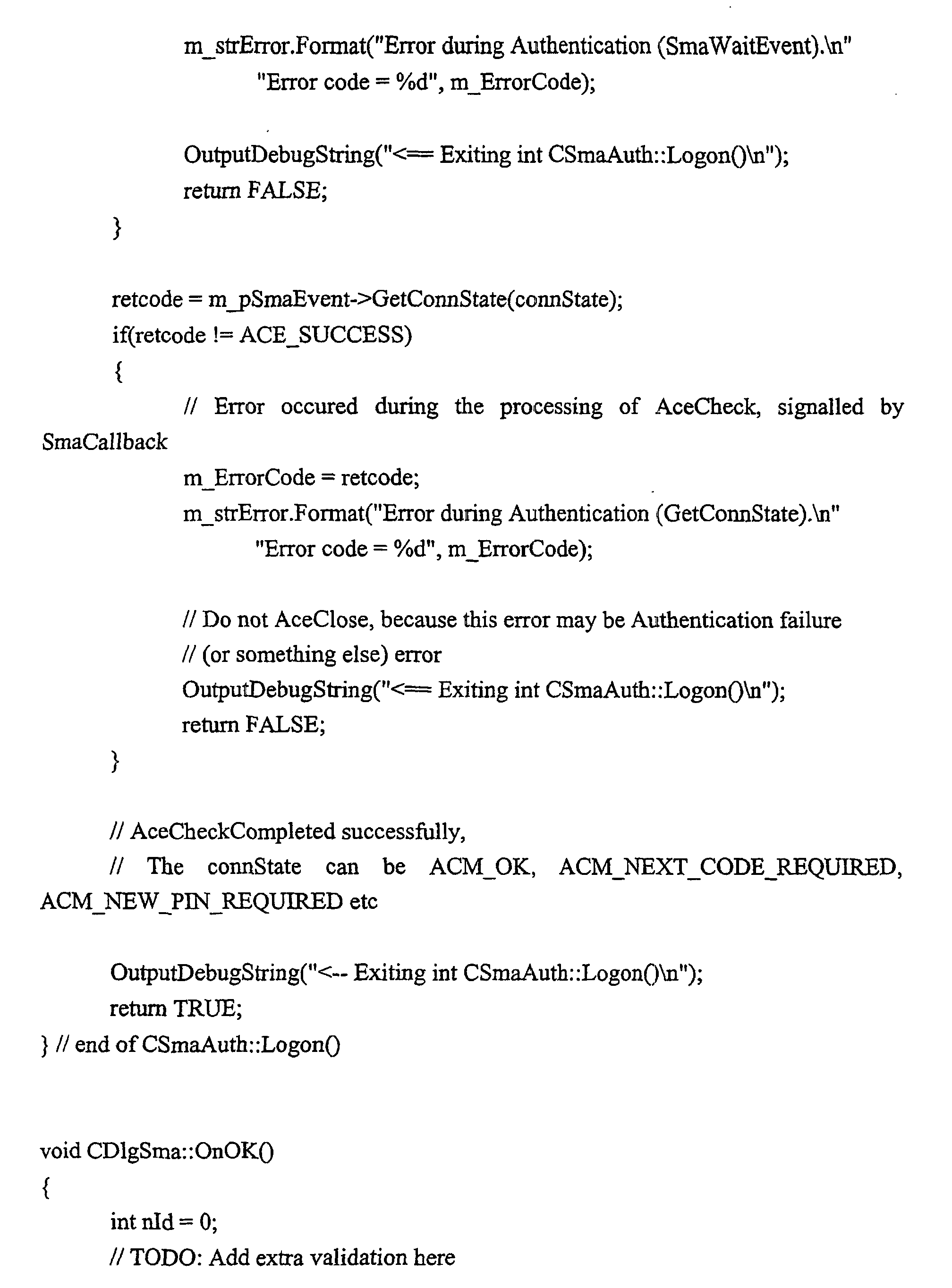

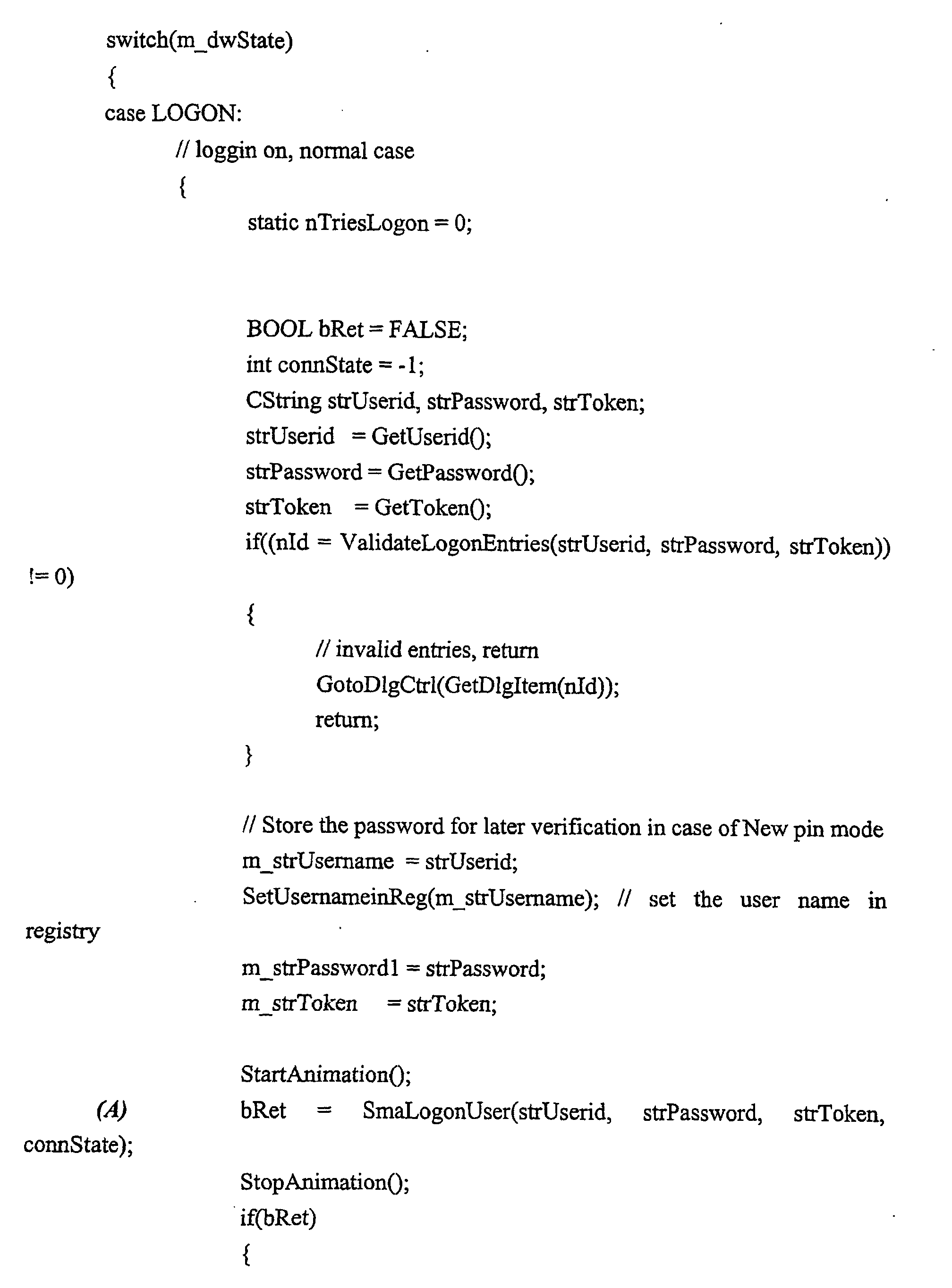

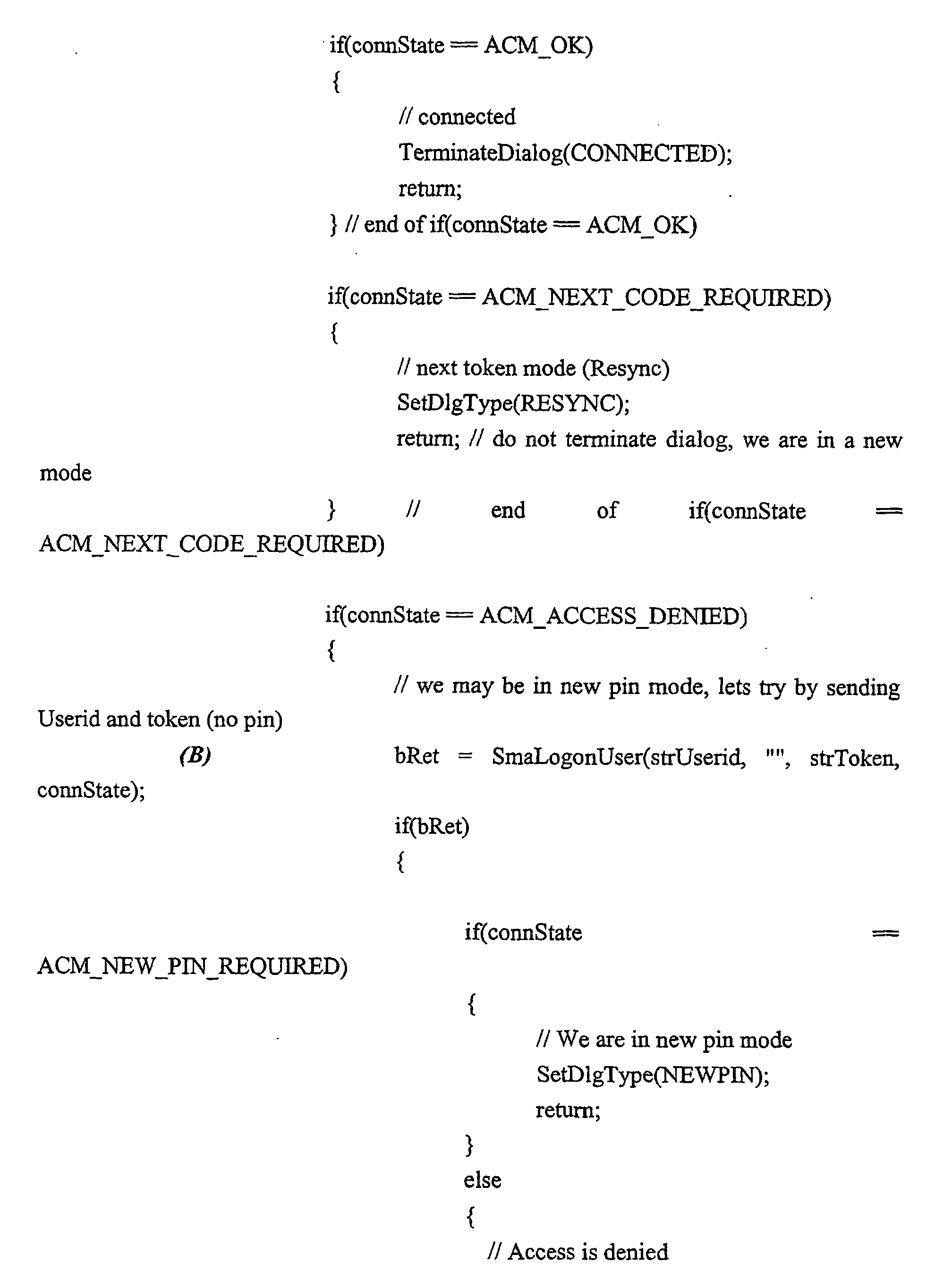

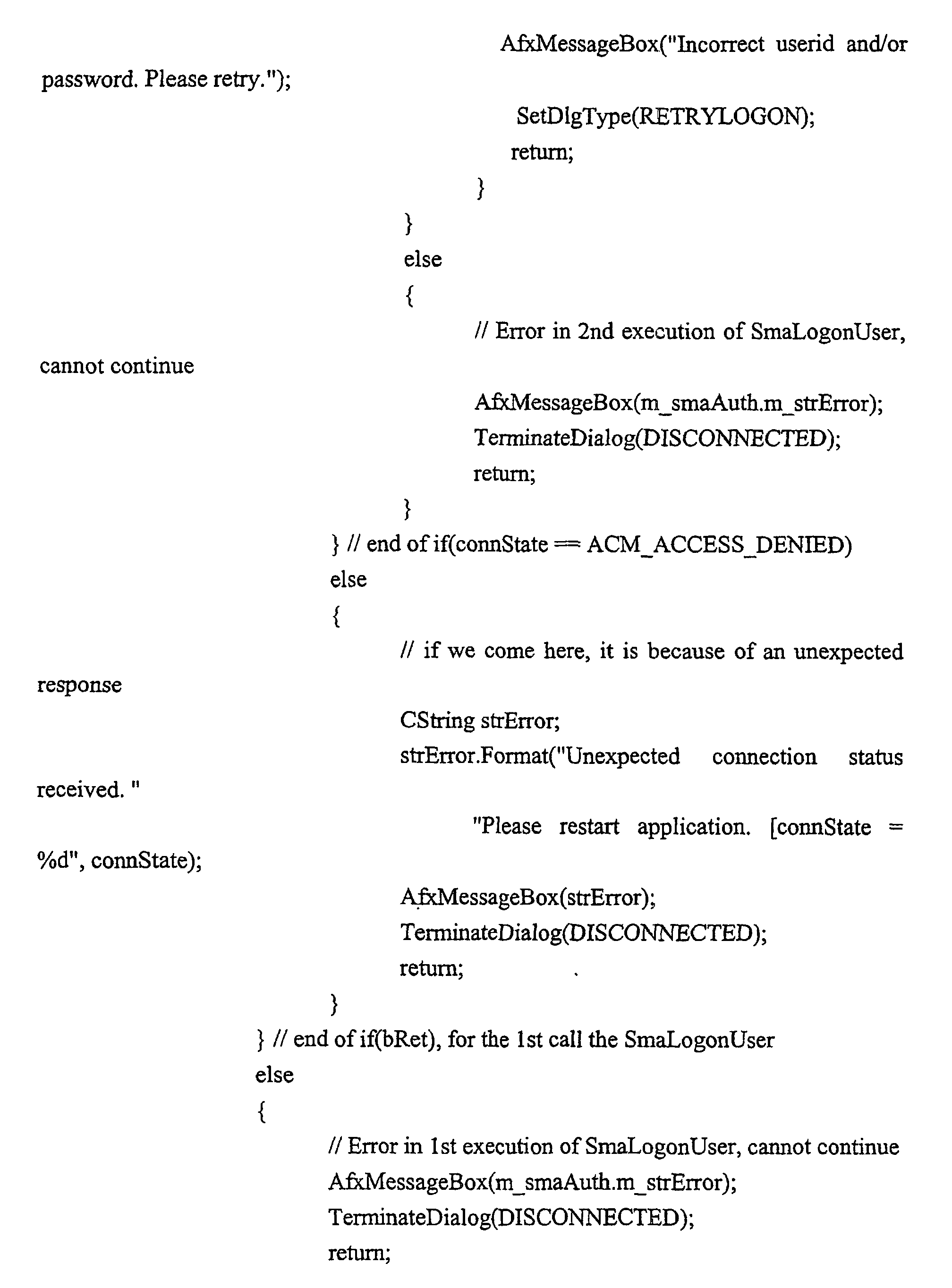

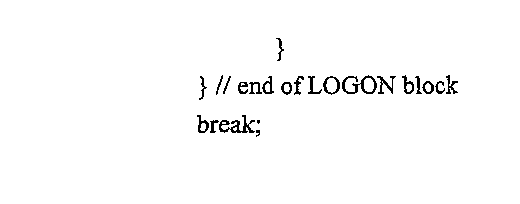

In the foregoing code, an authentication request (*A*) is executed where both the strPassword (i.e. PIN) and strToken are passed to the function SmaLogonUser() which invokes the class CsmaAuth::Logon(). If the authentication API responds ACM_ACCESS_DENIED, typical implementations would present a message box denying access and the process ends. In the above code another attempt (***B***) is executed where the authentication request is made without the strPassword variable (i.e. using the token only). If the authentication API responds ACM_NEW_PIN_REQUIRED, the normal logic for new PIN mode is employed. If the authentication API responds with anything else, a message box is presented denying access.

Fig. 9 illustrates one embodiment of the present invention for one or more different types of transactions. As shown in this example, a centralized authentication system 81 is used to authenticate users for a variety of different transactions, including both business and consumer mass markets. Four examples of such transactions include point of sale transactions 82 (e.g. credit card purchases at retail stores), system and/or information access for businesses 83 (e.g. authentication for a company's network), financial institutions providing consumer services 84 (e.g. on-line banking, account transfers, payment, investments, ATM access, traditional banking services, and the like), and electronic commerce 85 (e.g. Internet sales). Beyond these four examples, other types of transactions are also contemplated.

One or more agent machines are clients to the central authentication system 81. Typically, an agent machine is dedicated to only one type of transaction, however, it should be realized that any given agent machine may be associated with a plurality of different types of transactions. Because each of the various types of transactions authenticate using the central authentication system 81, a user has a single and uniform authentication methodology for each of the various types of transactions. Beyond the convenience of a uniform authentication methodology, improved authentication can also be realized. Currently, many consumer related transactions require only a PIN or password (e.g. ATM, on-line banking, etc.). In some cases, such as retail credit card transactions, the only authentication sometimes involves a clerk comparing a signature, if this duty is performed at all. If a strong authentication system is used, such a two-factor systems using a PIN in combination with a token or biometric reading, authentication for many systems will be dramatically improved.

A variety of business models can be developed around the present technology. For instance, fees can be collected, either from the user or the business, for each authentication transaction performed by the central authentication system. Fee structures can vary widely, including monthly or annual rates for access to the central authentication service, flat rates for each transaction, variable rates based on the value of the transaction, variable rates based on authentication volume, any combination of the foregoing, and the like. Further, revenue generation through sales and/or leases of token generating devices could complement or replace authentication fees.

### EXAMPLES

The following examples depict three typical scenarios of users interacting with the authentication system of the present invention. Example 1 depicts an exemplary interaction in which the authentication server is in "Normal" mode. Example 2 depicts an exemplary illustration in which the authentication server is in "New PIN" mode. Finally, Example 3 depicts an exemplary interaction in which the authentication server is in ''Next Token" mode.

### Example 1

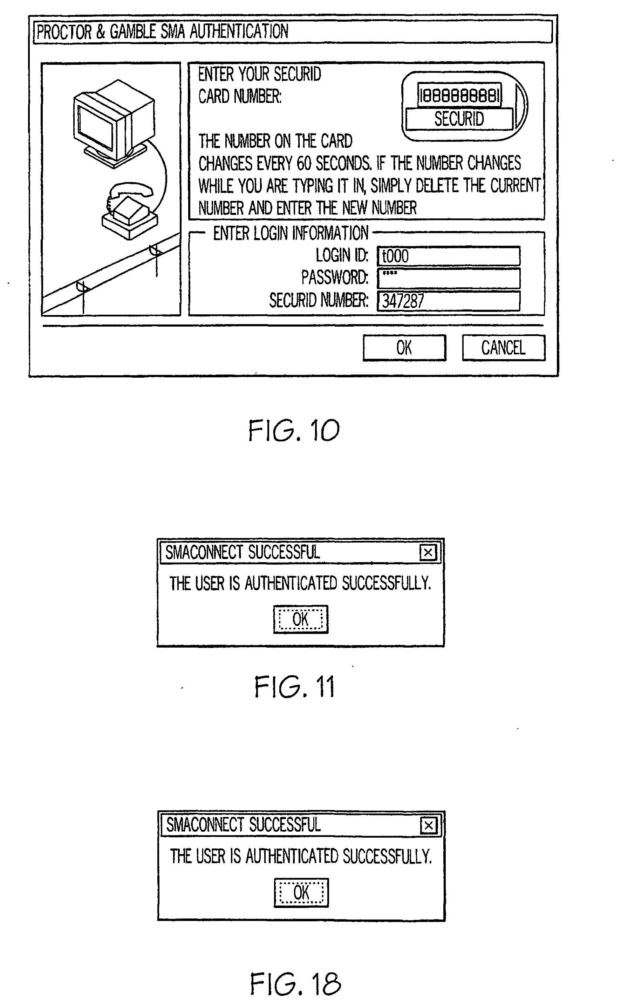

As depicted in Fig. 10, the authentication client 21 begins the interaction by requesting a Login ID, Password and SecurID Number. After the user has enter the information and clicks on "OK", the authentication client concatenates the Password and SecurID Number as the Passcode. The authentication client then sends the Login ID and Passcode to the authentication server. If the correct information was entered and the Passcode is valid, the authentication server returns the error code "ACM_OK". The authentication client receives the error code and presents the user with a dialog box informing the user of the successful authentication interaction as depicted in Fig. 11.

### Example 2

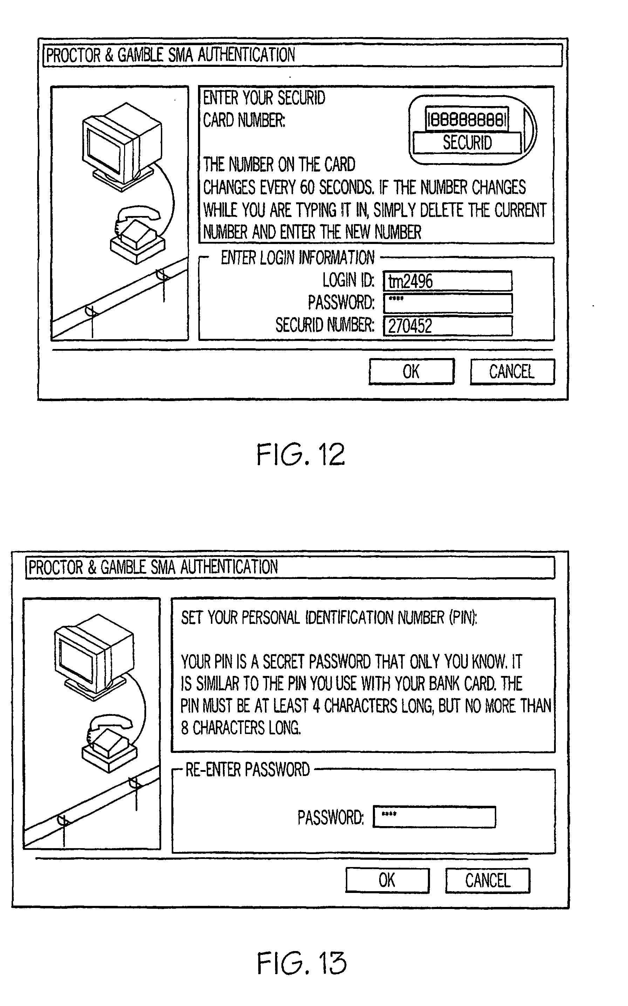

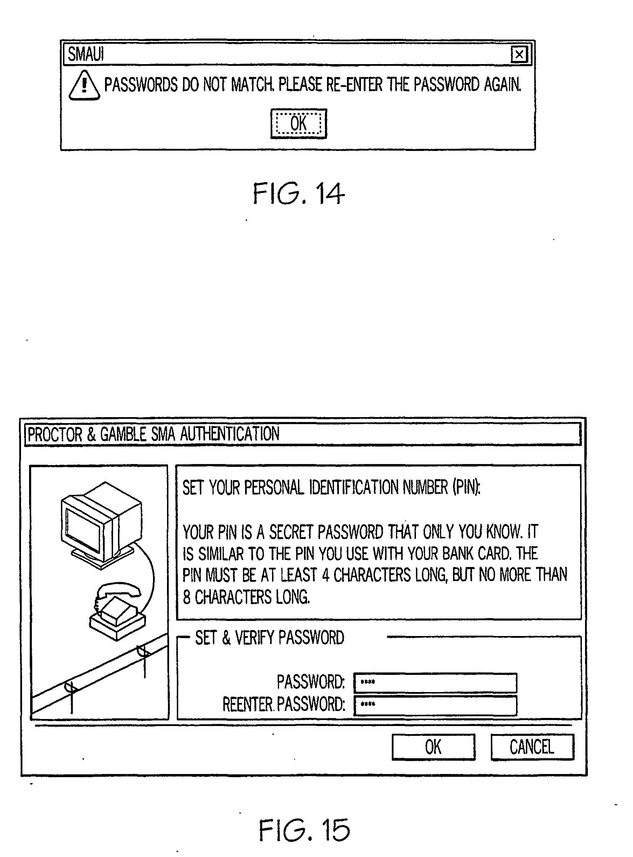

In this example, an administrative user has configured the authentication server to be in a state of ''New PIN" mode. As depicted in Fig. 12, the authentication client 21 begins the interaction by requesting a Login ID, Password (PIN) and SecurID Number. After the user has enter the information and clicks on "OK", the authentication client concatenates the Password and SecurID Number as the Passcode. The authentication client then sends the Login ID and Passcode to the authentication server. Since the user's account is in "New PIN" mode, the authentication server returns the error code "ACM_ACCESS_DENIED". The authentication client then retries the authentication request, but this time only sends a Passcode containing the SecurID Number (i.e., no PIN number). If the revised Passcode (i.e. SecurID) correctly corresponds to the Login ID, the authentication server returns the error code "ACM_NEW_PIN_REQUIRED". The authentication client then displays a dialog box to the user as depicted in Fig. 13, requesting the user to reconfirm the Password (PIN). If the user enters a Password that matches the password in the original dialog of Fig. 12, then the PIN is sent to the authentication server and is set for the user's account. The authentication server, then changes the state from ''New PIN" mode to "Normal" mode. If the user does not enter a password that matches the previously entered password, the authentication client displays, as depicted in Fig. 14, a dialog box informing the user of the failure to match. Once the user has acknowledged the dialog box, the authentication client prompts the user to enter a new Password and reconfirm the password as depicted in Fig. 15. The authentication client compares the new PIN with the reconfirmation PIN, and sends the new PIN to the authentication server when the PIN numbers match. Once the authentication server is sent the new PIN, the authentication server returns an error code of "ACM_SUCCESS".

### Example 3

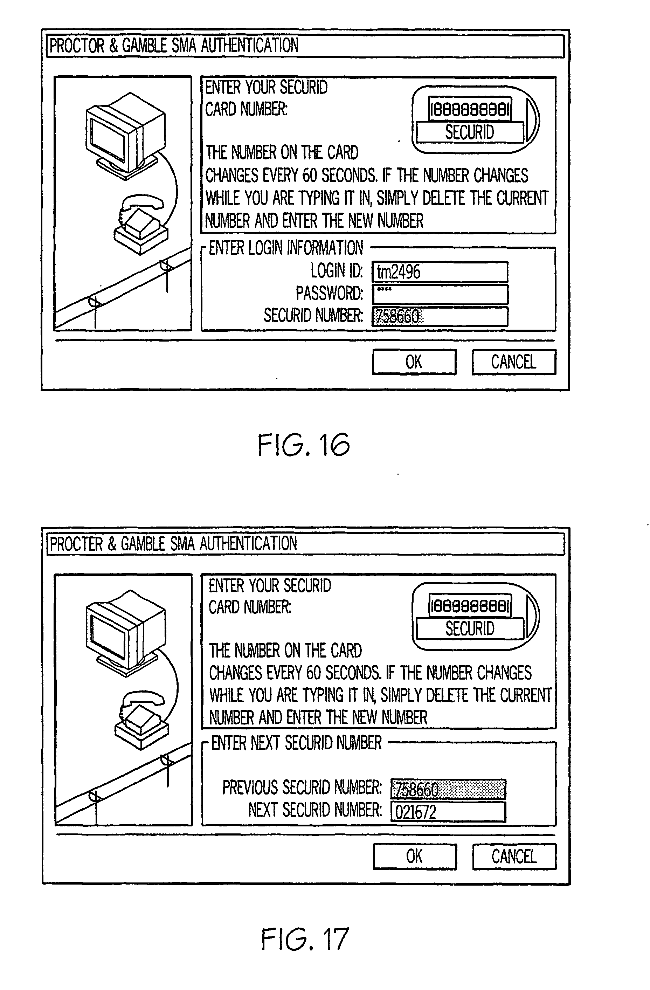

In this example, the authentication server is in ''Next Token" mode. As depicted in Fig. 16, the authentication client 21 begins the interaction by requesting a Login ID, Password and SecurID (Token) Number. After the user has enter the information and clicks on "OK", the authentication client concatenates the Password and SecurID Number as the Passcode. The authentication client then sends the Login ID and Passcode to the authentication server. Since the user's account is in "Next Token" mode, the authentication server will return the error code "ACM_NEXT_CODE_REQUIRED" to the client. The authentication client, as depicted in Fig. 17, prompts the user with the previous SecurID number (token) and asks the user to enter the next SecurID Number once it changes. Once the user enters the next SecurID Number and clicks "OK", the SecurID Number is sent to the authentication server. The authentication server determines whether the SecurID Number is correct, and if so returns an error code to the authentication client of "ACM_SUCCESS". The authentication client receives the error code and presents the user with a dialog box informing the user of the successful authentication interaction as depicted in Fig. 18.

The foregoing description of the preferred embodiment of the invention and examples have been presented for purposes of illustration and description. It is not intended to be exhaustive nor to limit the invention to the precise form disclosed. Many alternatives, modifications, and variations will be apparent to those skilled in the art in light of the above teaching.

## Claims

1. A computer system comprising:
a) a network of computers (10);
b) an authentication server (15) on the network,
c) a plurality of agent computers (20) on the network, each of said plurality of agent computers comprising agent software (21) for the authentication server,
said computer system being **characterized in that** said authentication server comprises
i) an anthentication engine (24) having a first state wherein the authentication engine uses a password comprising two elements and a second state wherein the authentication engine uses a password comprising one element; and
ii) an application programming interface through which other computers of the network may make requests to the authentication engine (24);
and said agent software (21) for the authentication server (15) is encoded for
i) sending a first authentication request via the application programming interface to the authentication engine (24) using a password comprising two elements, and
ii) if authentication is not established in response to the first authentication request, sending a second authentication request via the application programming interface to the authentication engine (24) using a password comprising one element.

2. The computer system of claim 1, wherein the two elements of the password in the first state are a user identifier and a token.

3. The computer system of claim 2, wherein the password in the first state is a string comprising the concatenation of the user identifier and the token.

4. The computer system of claim 2, wherein a token generation device and authentication engine independently generate the token in parallel.

5. The computer system of claim 2, wherein the user identifier is a PIN.

6. The computer system of claim 5, wherein the second state is new PIN mode.

7. The computer system of claim 2, wherein the one element of the password for the second state is a token.

8. The computer system of any of the preceding claims, wherein the authentication engine is a centrally managed, strong, two-factor user authentication service.

9. The computer system of any of the preceding claims, wherein one or more of the plurality of agent computers are servers on the network.

10. A method for centralized user authentication on a computer network (10) where each of a plurality of agent computers (20) perform the method, comprising:
a) providing an authentication agent on each of the agent computers (20);
b) prompting a user through the authentication agent to enter a user identification and token;
c) receiving the user identifier and token from the user;
said method being **characterized in that** it further comprises the steps of:
d) concatenating the user identifier and token;
e) passing the concatenated user identifier and token to a central authentication system on the network;
f) receiving a response from the central authentication system; and
g) if the response does not permit access, passing the token as a password to the central authentication system.

11. The method of claim 10, wherein in step (e) the concatenated user identifier and token are passed as a password to the central authentication system.

12. That method of claim 10 or 11, wherein in step (g) the token is passed as a password if the response denies access.

13. The method of claim 10, 11, or 12, wherein in step (c), a login ID is additionally obtained.

14. The method of claim 10, 11, 12, or 13, wherein in step (e), the login ID is additionally passed to the central authentication system.

15. A computer readable medium (14), comprising instructions for performing the method for centralized user authentication on a computer network (10) where each of a plurality of agent computers (20) perform the method, said instructions comprising the steps of:
a) providing an authentication agent on each of the agent computers (20);
b) prompting a user through the authentication agent to enter a user identification and token;
c) receiving the user identifier and token from the user;
said computer readable medium being **characterized in that** said instructions further comprise the steps of:
d) concatenating the user identifier and token;
e) passing the concatenated user identifier and token to a central authentication system on the network;
f) receiving a response from the central authentication system; and
g) if the response does not permit access, passing the token as a password to the central authentication system.

16. A program product, comprising signal bearing media embodying a program of machine readable instructions executable by a digital data processor to perform a method for centralized user authentication on a computer network (10) where each of a plurality of agent computers (20) perform the method, said instructions comprising the steps of:
a) providing an authentication agent on each of the agent computers (20);
b) prompting a user through the authentication agent to enter a user identification and token;
c) receiving the user identifier and token from the user;
said program product being **characterized in that** said instructions further comprise the steps of:
d) concatenating the user identifier and token;
e) passing the concatenated user identifier and token to a central authentication system on the network;
f) receiving a response from the central authentication system; and
g) if the response does not permit access, passing the token as a password to the central authentication system.

## Patentansprüche

1. Computersystem, das umfasst:
a) ein Netz aus Computern (10),
b) einen Authentisierungsserver (15) in dem Netz,
c) mehrere Agenten-Computer (20) in dem Netz, wovon jeder eine Agenten-Software (21) für den Authentisierungsserver enthält,
wobei das Computersystem **dadurch gekennzeichnet ist, dass** der Authentisierungsserver umfasst:
i) eine Authentisierungsmaschine (24) mit einem ersten Zustand, in dem die Authentisierungsmaschine ein Kennwort verwendet, das zwei Elemente enthält, und einem zweiten Zustand, in dem die Authentisierungsmaschine ein Kennwort verwendet, das ein Element enthält; und
ii) eine Anwendungsprogrammierungsschnittstelle, über die andere Computer des Netzes Anforderungen an die Authentisierungsmaschine (24) stellen können;
und dass die Agenten-Software (21) für den Authentisierungsserver (15) so codiert ist, dass sie:
i) eine erste Authentisierungsanforderung über die Anwendungsprogrammierungsschnittstelle unter Verwendung eines zwei Elemente enthaltenden Kennworts an die Authentisierungsmaschine (24) sendet und
ü) dann, wenn die Authentisierung infolge der ersten Authentisierungsanforderung nicht hergestellt wird, eine zweite Authentisierungsanforderung über die Anwendungsprogrammierungsschnittstelle unter Verwendung eines ein Element enthaltenden Kennworts an die Authentisierungsmaschine (24) sendet.

2. Computersystem nach Anspruch 1, bei dem die zwei Elemente des Kennworts im ersten Zustand eine Anwenderkennung und ein Token sind.

3. Computersystem nach Anspruch 2, bei dem das Kennwort im ersten Zustand ein String ist, der die Verknüpfung von Anwenderkennung und Token enthält.

4. Computersystem nach Anspruch 2, bei dem eine Token-Erzeugungsvorrichtung und die Authentisierungsmaschine unabhängig und parallel das Token erzeugen.

5. Computersystem nach Anspruch 2, bei dem die Anwenderkennung eine PIN ist.

6. Computersystem nach Anspruch 5, bei dem der zweite Zustand ein neuer PIN-Modus ist.

7. Computersystem nach Anspruch 2, bei dem das eine Element des Kennworts für den zweiten Zustand ein Token ist.

8. Computersystem nach einem der vorhergehenden Ansprüche, bei dem die Authentisierungsmaschine ein zentral gemanagter, starker, Zweifaktor-Anwenderauthentisierungsdienst ist.

9. Computersystem nach einem der vorhergehenden Ansprüche, bei dem einer oder mehrere der mehreren Agenten-Computer Server in dem Netz sind.

10. Verfahren zur zentralisierten Anwenderauthentisierung in einem Computernetz (10), wobei jeder von mehreren Agenten-Computern (20) das Verfahren ausführt, das die folgenden Schritte umfasst:
a) Vorsehen eines Authentisierungsagenten in jedem der Agenten-Computer (20);
b) Auffordern eines Anwenders über den Authentisierungsagenten, eine Anwenderkennung und ein Token einzugeben;
c) Empfangen der Anwenderkennung und des Tokens vom Anwender;
wobei das Verfahren **dadurch gekennzeichnet ist dass** es ferner die folgenden Schritte umfasst:
d) Verknüpfen der Anwenderkennung und des Tokens;
e) Leiten der Anwenderkennung und des Tokens, die miteinander verknüpft sind, an ein zentrales Authentisierungssystem in dem Netz;
f) Empfangen einer Antwort von dem zentralen Authentisierungssystem und
g) Leiten des Tokens als ein Kennwort an das zentrale Authentisierungssystem, falls die Antwort keinen Zugriff zulässt.

11. Verfahren nach Anspruch 10, bei dem im Schritt (e) die Anwenderkennung und das Token, die miteinander verknüpft sind, als ein Kennwort an das zentrale Authentisierungssystem geleitet werden.

12. Verfahren nach Anspruch 10 oder 11, bei dem im Schritt (g) das Token als ein Kennwort geleitet wird, falls die Antwort einen Zugriff verweigert.

13. Verfahren nach Anspruch 10, 11 oder 12, bei dem im Schritt (c) zusätzlich eine Anmeldekennung erhalten wird.

14. Verfahren nach Anspruch 10, 11, 12 oder 13, bei dem im Schritt (e) die Anmeldekennung zusätzlich zu dem zentralen Authentisierungssystem geleitet wird.

15. Computerlesbares Medium (14), das Befehle zum Ausführen des Verfahrens für eine zentralisierte Anwenderauthentisierung in einem Computernetz (10) umfasst, wo jeder von mehreren Agenten-Computern (20) das Verfahren ausführt, wobei die Befehle die folgenden Schritte umfassen:
a) Vorsehen eines Authentisierungsagenten in jedem der Agenten-Computer (20);
b) Auffordern eines Anwenders über den Authentisierungsagenten, eine Anwenderkennung und ein Token einzugeben;
c) Empfangen der Anwenderkennung und des Tokens von dem Anwender;
wobei das computerlesbare Medium **dadurch gekennzeichnet ist, dass** die Befehle ferner die folgenden Schritte umfassen:
d) Verknüpfen der Anwenderkennung und des Tokens;
e) Leiten der Anwenderkennung und des Tokens, die miteinander verknüpft sind, an ein zentrales Authentisierungssystem in dem Netz;
f) Empfangen einer Antwort von dem zentralen Authentisierungssystem; und
g) falls die Antwort keinen Zugriff erlaubt, Leiten des Tokens als ein Kennwort an das zentrale Authentisierungssystem.

16. Programmprodukt, das Signale tragende Medien enthält, die ein Programm aus maschinenlesbaren Befehlen verkörpern, die von einem digitalen Datenprozessor ausführbar sind, um ein Verfahren für eine zentralisierte Anwenderauthentisierung in einem Computernetz (10) auszuführen, wobei jeder von mehreren Agenten-Computern (20) das Verfahren ausführt, das die folgenden Schritte umfasst:
a) Vorsehen eines Authentisierungsagenten in jedem der Agenten-Computer (20);
b) Auffordern eines Anwenders über den Authentisierungsagenten, eine Anwenderkennung und ein Token einzugeben;
c) Empfangen der Anwenderkennung und des Tokens vom Anwender;
wobei das Programmprodukt **dadurch gekennzeichnet ist, dass** die Befehle ferner die folgenden Schritte umfassen:
d) Verknüpfen der Anwenderkennung und des Tokens;
e) Leiten der Anwenderkennung und des Tokens, die miteinander verknüpft sind, an ein zentrales Authentisierungssystem in dem Netz;
f) Empfangen einer Antwort von dem zentralen Authentisierungssystem; und
g) falls die Antwort keinen Zugriff erlaubt, Leiten des Tokens als ein Kennwort an das zentrale Authentisierungssystem.

## Revendications

1. Un système informatique comprenant :
a) un réseau d'ordinateurs (10),
b) un serveur d'authentification (15) sur le réseau,
c) une pluralité d'ordinateurs agents (20) sur le réseau, chacun de ladite pluralité d'ordinateurs agents comprenant un logiciel agent (21) pour le serveur d'authentification,
ledit système informatique étant **caractérisé en ce que** ledit serveur d'authentification comprend :
i) un moteur d'authentification (24) ayant un premier état dans lequel le moteur d'authentification utilise un mot de passe comprenant deux éléments, et un deuxième état dans lequel le moteur d'authentification utilise un mot de passe comprenant un seul élément ; et
ii) une interface de programmation d'application par le biais de laquelle les autres ordinateurs du réseau peuvent envoyer des requêtes au moteur d'authentification (24) ;
et ledit logiciel agent (21) pour le serveur d'authentification (15) est codé pour :
i) envoyer une première requête d'authentification par le biais de l'interface de programmation d'application au moteur d'authentification (24) en utilisant un mot de passe comprenant deux éléments ; et
ii) si l'authentification n'est pas établie en réponse à la première requête d'authentification, envoyer une seconde requête d'authentification au moteur d'authentification (24) par le biais de l'interface de programmation d'application, en utilisant un mot de passe comprenant un seul élément.

2. Le système informatique selon la revendication 1, dans lequel les deux éléments du mot de passe dans le premier état sont un identifiant utilisateur et un jeton d'authentification.

3. Le système informatique selon la revendication 2, dans lequel le mot de passe dans le premier état est une chaîne comprenant la concaténation de l'identifiant utilisateur et du jeton d'authentification.

4. Le système informatique selon la revendication 2, dans lequel un dispositif de production d'un jeton d'authentification et un moteur d'authentification produisent de façon indépendante le jeton d'authentification en parallèle.

5. Le système informatique selon la revendication 2, dans lequel l'identifiant utilisateur est un numéro d'identification personnel (PIN).

6. Le système informatique selon la revendication 5, dans lequel le second état est un nouveau mode PIN.

7. Le système informatique selon la revendication 2, dans lequel le un seul élément du mot de passe pour le second état est un jeton d'authentification.

8. Le système informatique selon l'une quelconque des revendications 1 à 7, dans lequel le moteur d'authentification est un service d'authentification utilisateur puissant à deux facteurs, géré de manière centrale.

9. Le système informatique selon l'une quelconque des revendications 1 à 8, dans lequel un ou plusieurs de la pluralité d'ordinateurs agents sont des serveurs sur le réseau.

10. Un procédé d'authentification utilisateur centralisée sur un réseau informatique (10) dans lequel chacun d'une pluralité d'ordinateurs agents (20) exécute le procédé, comprenant les étapes consistant à :
a) prévoir un agent d'authentification sur chacun des ordinateurs agents (20) ;
b) inviter un utilisateur, par le biais de l'agent d'authentification, à saisir une identification utilisateur et un jeton d'authentification ;
c) recevoir l'identifiant utilisateur et le jeton d'authentification de la part de l'utilisateur ;
ledit procédé étant **caractérisé en ce qu'**il comprend en outre les étapes consistant à :
d) concaténer l'identifiant utilisateur et le jeton d'authentification ;
e) transmettre l'identifiant utilisateur et le jeton d'authentification concaténés à un système d'authentification central sur le réseau ;
f) recevoir une réponse de la part du système d'authentification central ; et
g) si la réponse n'autorise pas l'accès, transmettre le jeton d'authentification en tant qu'un mot de passe au système d'authentification central.

11. Le procédé selon la revendication 10, dans lequel à l'étape (e) l'identifiant utilisateur et le jeton d'authentification concaténés sont transmis en tant qu'un mot de passe au système d'authentification central.

12. Le procédé selon la revendication 10 ou la revendication 11, dans lequel à l'étape (g) le jeton d'authentification est transmis en tant qu'un mot de passe si la réponse refuse l'accès.

13. Le procédé selon l'une quelconque des revendications 10, 11 ou 12, dans lequel à l'étape (c), un identifiant de connexion ID est en outre obtenu.

14. Le procédé selon l'une quelconque des revendications 10, 11, 12 ou 13, dans lequel à l'étape (e), l'identifiant de connexion ID est transmis en outre au système d'authentification central.

15. Un support de lecture informatique (14), comprenant des instructions pour exécuter le procédé d'authentification utilisateur centralisée sur un réseau informatique (10) dans lequel chacun d'une pluralité d'ordinateurs agents (20) exécute le procédé, lesdites instructions comprenant les étapes consistant à :
a) prévoir un agent d'authentification sur chacun des ordinateurs agents (20) ;
b) inviter un utilisateur, par le biais de l'agent d'authentification, à saisir une identification utilisateur et un jeton d'authentification ;
c) recevoir l'identifiant utilisateur et le jeton d'authentification de la part de l'utilisateur ;
ledit support de lecture informatique étant **caractérisé en ce que** lesdites instructions comprennent en outre les étapes consistant à :
d) concaténer l'identifiant utilisateur et le jeton d'authentification ;
e) transmettre l'identifiant utilisateur et le jeton d'authentification concaténés à un système d'authentification central sur le réseau ;
f) recevoir une réponse de la part du système d'authentification central ; et
g) si la réponse n'autorise pas l'accès, transmettre le jeton d'authentification en tant qu'un mot de passe au système d'authentification central.

16. Un produit programme, comprenant un support porteur de signaux renfermant un programme d'instructions machine lisibles, exécutable par un processeur de données numériques, afin d'exécuter un procédé d'authentification utilisateur centralisée sur un réseau informatique (10) dans lequel chacun d'une pluralité d'ordinateurs agents (20) exécute le procédé, lesdites instructions comprenant les étapes consistant à :
a) prévoir un agent d'authentification sur chacun des ordinateurs agents (20) ;
b) inviter un utilisateur, par le biais de l'agent d'authentification, à saisir une identification utilisateur et un jeton d'authentification ;
c) recevoir l'identifiant utilisateur et le jeton d'authentification de la part de l'utilisateur ;
ledit produit programme étant **caractérisé en ce que** lesdites instructions comprennent en outre les étapes consistant à :
d) concaténer l'identifiant utilisateur et le jeton d'authentification ;
e) transmettre l'identifiant utilisateur et le jeton d'authentification concaténés à un système d'authentification central sur le réseau ;
f) recevoir une réponse de la part du système d'authentification central ; et
g) si la réponse n'autorise pas l'accès, transmettre le jeton d'authentification en tant qu'un mot de passe au système d'authentification central.
